# EUROPEAN PATENT APPLICATION

(11) **EP 3 959 988 A1**
(43) Date of publication of application: **02.03.2022**
(21) Application number: 20794424.0
(22) Date of filing: 27.03.2020
(51) Int. Cl.: A23F 3/16

(54) **POWDER COMPOSITION**

(30) Priority: 26.04.2019 JP 2019086383
(71) Applicant: Suntory Holdings Limited, Osaka 530-8203 (JP)
(72) Inventor: YONEZAWA, Daisaku, Kawasaki-shi, Kanagawa 211-0067 (JP); OTSUKA, Makoto, Soraku-gun, Kyoto 619-0284 (JP); MUKAI, Takashi, Soraku-gun, Kyoto 619-0284 (JP); NAKAJIMA, Takeshi, Soraku-gun, Kyoto 619-0284 (JP); KIKUCHI, Keita, Soraku-gun, Kyoto 619-0284 (JP); HIRAYAMA, Yuji, Kawasaki-shi, Kanagawa 211-0067 (JP); OSANAI, Taisuke, Kawasaki-shi, Kanagawa 211-0067 (JP); HAMABA, Taishu, Kawasaki-shi, Kanagawa 211-0067 (JP)
(74) Representative: Vossius & Partner Patentanwälte Rechtsanwälte mbB
(86) International application number: PCT/JP2020/013901
(87) International publication number: WO 2020/217849

(57) **Abstract**

An object of the present invention is to provide a powder composition having an excellent ability to retain fragrance components derived from tea leaves.

In a powder composition comprising a tea leaf extract, a dextrin is added to adjust the molecular weight distribution of the composition such that the percentage of a molecular weight fraction of not less than 250,000 falls within the range of from 0.5 to 10%.

## Description

### TECHNICAL FIELD

The present invention relates to a powder composition, and more particularly to a powder composition comprising a tea leaf extract and a dextrin.

### BACKGROUND ART

A powdering method commonly adopted to obtain instant tea is a spray-drying method suitable for continuous mass production. Spray drying is a method in which the water content is instantaneously evaporated by spraying fine liquid droplets into hot air. In this method, the residence time for exposure to high temperatures is short, and supplied heat is consumed as a latent heat of evaporation, so that heat load on a liquid content can be minimized and a powder with less deterioration in quality can be obtained. Further, as the concentration of a liquid content to be spray-dried is higher, the aroma components present in the liquid content can be retained at higher percentages after spray-drying. This can be explained by selective diffusion theory. When the solute concentration in droplets is low during a drying process, the diffusion coefficient of aroma components is small, and the aroma components volatilize simultaneously with the evaporation of water. However, as the solute concentration in droplets is higher, the diffusion coefficient of aroma components becomes larger, and water evaporates earlier before aroma components start to volatilize, so that aroma remains without disappearing. Therefore, in order to acquire high-quality instant tea, it is important to produce a liquid tea concentrate comprising high concentrations of aroma components.

From the viewpoint of the principle as to in which of the solid, liquid and gas phases separation takes place, methods for concentrating a liquid tea extract can be divided into three types: freeze-concentration (aqueous phase → solid), membrane concentration (aqueous phase → liquid), and evaporative concentration (aqueous phase → gas). Among them, evaporative concentration is disadvantageous in that it is difficult to obtain a liquid concentrate like tea concentrate which retains aroma components that can easily deteriorate due to heat, since this concentration causes a heavy heat load on a liquid content. Freeze concentration is disadvantageous not only due to significant hurdles to overcome for practical use, such as long concentration time and high cost, but also in that it is in the first place difficult to increase solute concentration. Therefore, these two types of concentrations have been seldom employed in practice. In contrast, membrane concentration is a method of increasing solute concentration by pressurizing a solution through a membrane with fine pores while it stays at normal temperature. Thus, since this type of concentration does not require evaporation or freezing, it is possible to increase solute concentration at low cost without causing any change in quality.

Another known approach to producing a liquid tea concentrate is to add, to a liquid tea concentrate, a dextrin which is one type of excipient having the molecular structure in which sugars are linked together in a chain form. For example, it is reported that when a non-cyclic dextrin with an average degree of polymerization of from 4 to 10 or a cyclic dextrin is added to a liquid extract of tea leaves, roasted grains or roasted beans before concentration, and then the mixed solution is subjected to membrane concentration at 40°C, the liquid extract can be concentrated without lowering concentration efficiency (PTL 1).

Further, it is known that particular types of dextrins are capable of enhancing the solubility of an instant tea after spray-drying. For example, it is reported that when carbon dioxide gas is dissolved in a tea comprising a dextrin with an average degree of polymerization of from 4 to 10 or a combination of said dextrin with a cyclic dextrin, and the mixed solution is spray-dried, an instant tea with excellent flavor and quick solubility can be produced (PTL 2). Also, it is reported that an instant tea with excellent flavor and solubility can be provided by spray-drying a liquid tea extract to which an indigestible dextrin is added (PTL 3).

### CITATION LIST

### PATENT LITERATURES

PTL 1: Japanese Examined Patent Publication No. JP H03-36491
PTL 2: Japanese Examined Patent Publication No. JP H03-35898
PTL 3: Japanese Unexamined Patent Application Publication No. JP 2009-17867

### SUMMARY OF INVENTION

### TECHNICAL PROBLEM

Fragrance components contributing to the aroma derived from tea leaves are generally easy to volatilize. Thus, in conventional techniques of producing a powder composition comprising a tea leaf extract, the produced powder composition does not necessarily fully retain the aroma derived from tea leaves. Accordingly, an object of the present invention is to provide a powder composition having an excellent ability to retain fragrance components derived from tea leaves.

### SOLUTION TO PROBLEM

In order to achieve the aforementioned object, the present inventors have made intensive studies with their attention being focused on dextrins used in the production of a powder composition, and as a result found that a powder composition effectively retaining fragrance components derived from tea leaves can be obtained by adjusting the type and amount of a dextrin to be used and setting the molecular weight distribution of the powder composition to satisfy specified requirements. Based on this finding, the inventors have completed the present invention.

The present invention is directed, but not limited, to the following.
(1) A powder composition comprising a tea leaf extract and a dextrin, wherein the percentage of a molecular weight fraction of not less than 250,000 in the molecular weight distribution of the composition is in the range of from 0.5 to 10%.
(2) The composition as set forth in (1), wherein the percentage of a molecular weight fraction of not less than 300,000 in the molecular weight distribution is in the range of from 0.2 to 5%.
(3) The composition as set forth in (1) or (2), wherein the ratio of the percentage (b) of a molecular weight fraction of not less than 300,000 but less than 350,000 in the molecular weight distribution relative to the percentage (a) of a molecular weight fraction of not less than 250,000 but less than 300,000 in the molecular weight distribution ((b)/(a)) is not less than 0.3.
(4) The composition as set forth in any one of (1) to (3), wherein the ratio of the percentage (c) of a molecular weight fraction of not less than 350,000 but less than 400,000 in the molecular weight distribution relative to the percentage (a) of a molecular weight fraction of not less than 250,000 but less than 300,000 in the molecular weight distribution ((c)/(a)) is not less than 0.1.
(5) The composition as set forth in any one of (1) to (4), wherein the dextrin comprises a linear dextrin and a cyclic dextrin.
(6) The composition as set forth in (5), wherein the dextrin further comprises a spiral dextrin.
(7) Use of a dextrin for enhancing the ability of a powder composition comprising a tea leaf extract to retain fragrance components derived from tea leaves, wherein the percentage of a molecular weight fraction of not less than 250,000 in the molecular weight distribution of the dextrin is not less than 10%.

### ADVANTAGEOUS EFFECTS OF INVENTION

According to the present invention, a powder composition having an excellent ability to retain fragrance components derived from tea leaves can be provided. The powder composition of this invention is advantageous in that fragrance components derived from tea leaves as present in a solution before a drying step of a production process can be retained in large amounts in a composition obtained after the drying step. Therefore, by using this invention, a powder composition having strong aroma derived from tea leaves can be provided.

The powder composition of the present invention can be made into a tea beverage using water or hot water, and can give off aroma derived from tea leaves upon drinking. The powder composition of this invention is extremely lighter in weight than beverages and thus is excellent in convenience during transportation.

Also, the powder composition of the present invention can be used as a source material to make foods. In recent years, there has been a tendency toward an increase in the number and types of tea flavored foods. By using the powder composition of this invention, the aroma derived from tea leaves can be imparted to, for example, confectionary foods, such as cakes, sponge cakes, candies, cookies, jellies, puddings and chocolates.

### BRIEF DESCRIPTION OF DRAWINGS

[FIG. 1] FIG. 1 depicts a graph showing the percent retentions of fragrance components derived from tea leaves in different samples during a period from before to after spray-drying. In this graph, the y axis represents different samples, and the x axis represents percent retention of fragrance components.
[FIG. 2-1] FIG. 2 depicts a graph showing the molecular weight distributions of different samples and linear dextrin B. In this graph, the y axis represents molecular weight, and the x axis represents the percentage (%) of each molecular weight fraction relative to the total.
[FIG. 2-2] FIG. 2 depicts a graph showing the molecular weight distributions of different samples and linear dextrin B. In this graph, the y axis represents molecular weight, and the x axis represents the percentage (%) of each molecular weight fraction relative to the total.

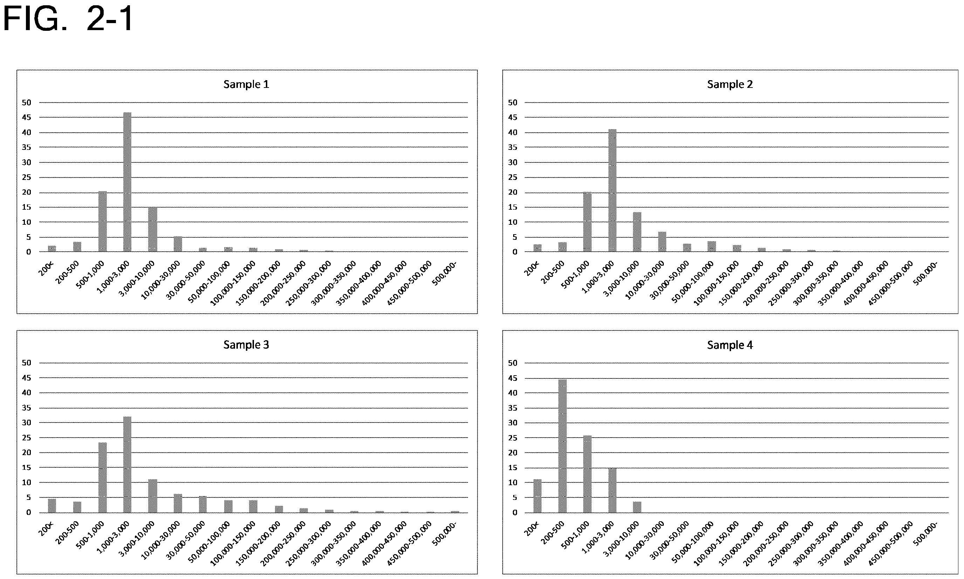

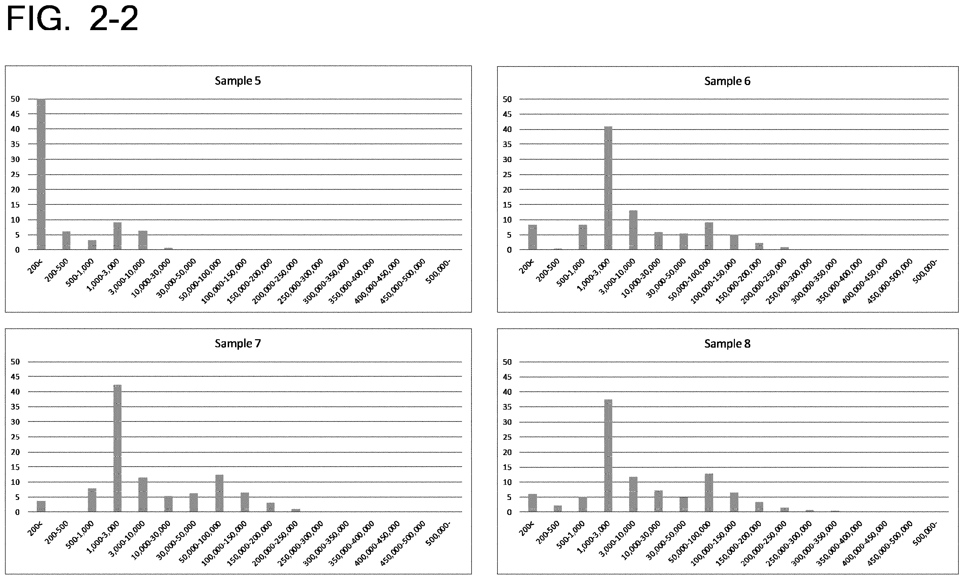

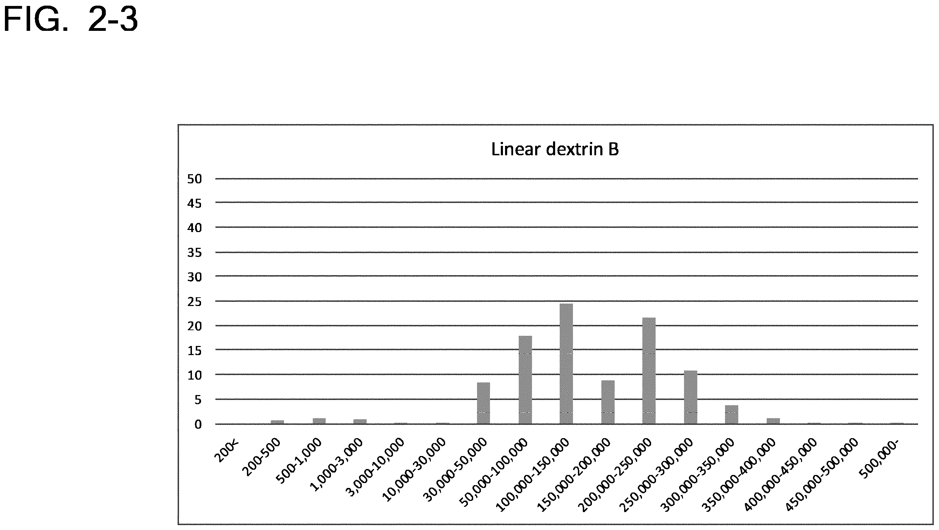

[FIG. 2-3] FIG. 2 depicts a graph showing the molecular weight distributions of different samples and linear dextrin B. In this graph, the y axis represents molecular weight, and the x axis represents the percentage (%) of each molecular weight fraction relative to the total.

### DESCRIPTION OF EMBODIMENTS

Hereunder, the powder composition of the present invention will be described. Unless otherwise specified, the terms " ppm", "ppb" and "wt.%" as used herein refer respectively to ppm, ppb, and wt.% on a weight/weight (w/w) basis.

One embodiment of the present invention is directed to a powder composition comprising a tea leaf extract and a dextrin, wherein the percentage of a molecular weight fraction of not less than 250,000 in the molecular weight distribution of the composition is in the range of from 0.5 to 10%. By adopting the aforementioned composition profile, the ability of the powder composition to retain fragrance components derived from tea leaves can be enhanced.

The powder composition of the present invention comprises a tea leaf extract. As referred to herein, the term "tea leaf extract" refers to components extracted from tea leaves. The tea leaves that can be used in the present invention are leaves obtained from plants belonging to the family *Theaceae,* genus *Camella* (*e.g., Camellia sinensis* (L) O. Kuntze). The tea leaves used in this invention can be classified into non-fermented tea leaves, semi-fermented tea leaves, and fermented tea leaves depending on the method of processing. Examples of non-fermented tea leaves include, but are not limited to, green tea leaves, such as *Aracha* (crude tea), *Sencha* (brewed green tea), *Gyokuro* (refined green tea), *Kabuse-cha* (shaded green tea), *Tencha* (non-ground tea leaves used for *Matcha*), *Bancha* (coarse green tea), *Houji-cha* (roasted green tea), *Kamairi-cha* (pot-roasted green tea), *Kukicha* (twig tea), *Bocha* (roasted twig tea), and *Mecha* (bud tea). Examples of semi-fermented tea leaves include, but are not limited to, oolong tea leaves, such as Tieguanyin (*Tekkanon*), Sezhong (*Shikishu*), Huangjin Gui (*Ougonkei*), and Wuyi tea (*Buigan* tea). Examples of fermented tea leaves include, but are not limited to, black tea leaves, such as Darjeeling, Assam, and Sri Lanka. In this invention, one type of tea leaves may be used alone, or two or more types of tea leaves may be used in a blended form. Any parts of plants, such as leaves and stems, can be used, as appropriate, to make tea without particular limitation as long as they are plant parts from which fragrance components can be extracted. Tea leaves can be used in any shapes, without limitation, such as whole or powdered leaf. The tea leaves used in this invention are not particularly limited, but green tea leaves are preferably used.

The powder composition of the present invention comprises a dextrin. The term "dextrin" is a generic term for carbohydrates produced by the hydrolysis of starch or glycogen. In this invention, the dextrin can be used as an excipient to form a powder composition. The molecular weight distribution of the powder composition of this invention can be adjusted depending on the weight average molecular weight of a dextrin to be used and its content in the composition. The dextrin content in the powder composition of this invention is not particularly limited, and is in the range of, for example, from 10 to 70 wt.%, preferably from 20 to 65 wt.%, more preferably from 30 to 60 wt.%. In this invention, a commercially available dextrin product can be used. The dextrin content in the powder composition can be measured by sugar analysis using a method known to skilled artisans.

In the molecular weight distribution of the powder composition of the present invention, the percentage of a molecular weight fraction of not less than 250,000 is in the range of from 0.5 to 10%. It is considered that when molecules with such a large molecular weight are present at a specified percentage, the ability of the powder composition to retain fragrance components derived from tea leaves can be enhanced. On the other hand, when the percentage of molecules with such a large molecular weight is too high, *e.g.,* the percentage of a molecular weight fraction of not less than 250,000 exceeds 10%, the composition before powdering tends to become too viscous to be treated for drying, thereby making it difficult to obtain powder. In the molecular weight distribution of the powder composition of this invention, the percentage of a molecular weight fraction of not less than 250,000 is in the range of preferably from 1 to 7%, more preferably 1 to 5%.

In the present invention, the distribution of molecular weight fractions in the powder composition can be investigated using gel permeation chromatography (GPC) analysis. To be specific, the distribution of molecular weight fractions in the powder composition can be investigated under the conditions detailed below.
System:
   Sampling injector: 231 XL (produced by Gilson)
   Pump: 305 (produced by Gilson)
   Column oven: CTO-10AS VP (produced by Shimadzu Corporation)
   Detector: RID-10A (produced by Shimadzu Corporation)
Columns: Connected in series in the following order:
   [Pump] → TSKgel Guard Column PWXL (6.0 mm I.D. × 4 cm) (produced by Tosoh Bioscience) → TSKgel G4000PWXL (particle size: 10 µm, 7.8 mm I.D. × 30 cm) (produced by Tosoh Bioscience) → TSKgel G3000PWXL (particle size 7 µm, 7.8 mm I.D. × 30 cm) (produced by Tosoh Bioscience) → [Detector]
Analytical data system: LabSolutions (produced by Shimadzu Corporation)
Flow rate: 1 mL/min.
Injection volume: 50 µL
Mobile phase: 0.1 mol/L sodium nitrate solution
Column temperature: 50°C

Analysis samples can be prepared by following the procedure described later in the Examples section. Also, the percentages of different molecular weight fractions in the molecular weight distribution can be determined by following the procedure described later in the Examples section. To be specific, the percentage of a molecular weight fraction can be determined by calculating the percentage of a peak area of interest relative to the total value of all peak areas obtained (total peak area).

The percentages of different sub-fractions of a molecular weight fraction of not less than 250,000 in the powder composition of the present invention are not particularly limited, but within the molecular weight range of not less than 250,000 but less than 500,000, it is preferred that a higher molecular weight sub-fraction should be present at a smaller percentage. In other words, the percentage of a molecular weight fraction of not less than 300,000 but less than 350,000 is preferably smaller than that of a molecular weight fraction of not less than 250,000 but less than 300,000; the percentage of a molecular weight fraction of not less than 350,000 but less than 400,000 is preferably smaller than that of a molecular weight fraction of not less than 300,000 but less than 350,000; the percentage of a molecular weight fraction of not less than 400,000 but less than 450,000 is preferably smaller than that of a molecular weight fraction of not less than 350,000 but less than 400,000; and the percentage of a molecular weight fraction of not less than 450,000 but less than 500,000 is preferably smaller than that of a molecular weight fraction of not less than 400,000 but less than 450,000.

The percentage of a molecular weight fraction of not less than 250,000 but less than 300,000 is in the range of, for example, from 0.3 to 2%, preferably from 0.3 to 1.5%, more preferably from 0.3 to 1.2%. The percentage of a molecular weight fraction of not less than 300,000 but less than 350,000 is in the range of, for example, from 0.1 to 1.2%, preferably from 0.2 to 1%, more preferably from 0.2 to 0.8%. The percentage of a molecular weight fraction of not less than 350,000 but less than 400,000 is in the range of, for example, from 0.1 to 0.8%, preferably from 0.1 to 0.7%, more preferably from 0.1 to 0.5%. The percentage of a molecular weight fraction of not less than 400,000 but less than 450,000 is in the range of, for example, from 0.05 to 0.5%, preferably from 0.05 to 0.4%, more preferably from 0.1 to 0.4%. The percentage of a molecular weight fraction of not less than 450,000 but less than 500,000 is in the range of, for example, from 0.04 to 0.4%, preferably from 0.05 to 0.3%, more preferably from 0.07 to 0.3%.

In the molecular weight distribution of the powder composition of the present invention, the percentage of a molecular weight fraction of not less than 300,000 is not particularly limited, and is in the range of, for example, from 0.2 to 5%, preferably from 0.3 to 3%, more preferably from 0.5 to 2%. In the molecular weight distribution of the powder composition of this invention, the percentage of a molecular weight fraction of not less than 350,000 is not particularly limited, and is in the range of, for example, from 0.2 to 2.5%, preferably from 0.3 to 2%, more preferably from 0.4 to 1.5%. In the molecular weight distribution of the powder composition of this invention, the percentage of a molecular weight fraction of not less than 400,000 is not particularly limited, and is in the range of, for example, from 0.2 to 1.5%, preferably from 0.3 to 1.2%, more preferably from 0.3 to 1%.

In the molecular weight distribution of the powder composition of the present invention, the percentage of a molecular weight fraction of less than 250,000 is not particularly limited. In the molecular weight distribution of the powder composition of this invention, the percentage of a molecular weight fraction of less than 3,000 is, for example, not less than 35%, preferably not less than 40%, more preferably not less than 45%. In the molecular weight distribution of the powder composition of this invention, the percentage of a molecular weight fraction of not less than 3,000 but less than 50,000 is in the range of, for example, from 15 to 30%, preferably from 17 to 27%, more preferably from 20 to 25%. In the molecular weight distribution of the powder composition of this invention, the percentage of a molecular weight fraction of not less than 50,000 but less than 150,000 is in the range of, for example, from 2 to 25%, preferably from 5 to 22%, more preferably from 6.5 to 20%. In the molecular weight distribution of the powder composition of this invention, the percentage of a molecular weight fraction of not less than 150,000 but less than 250,000 is in the range of, for example, from 1 to 10%, preferably from 2 to 8%, more preferably from 3 to 5%.

In the molecular weight distribution of the powder composition of the present invention, the ratio of the percentage (b) of a molecular weight fraction of not less than 300,000 but less than 350,000 relative to the percentage (a) of a molecular weight fraction of not less than 250,000 but less than 300,000 ((b)/(a)) is not particularly limited, and is, for example, not less than 0.3. Said ratio ((b)/(a)) is in the range of preferably from 0.3 to 0.9, more preferably from 0.35 to 0.85, still more preferably from 0.4 to 0.8.

In the molecular weight distribution of the powder composition of the present invention, the ratio of the percentage (c) of a molecular weight fraction of not less than 350,000 but less than 400,000 relative to the percentage (a) of a molecular weight fraction of not less than 250,000 but less than 300,000 ((c)/(a)) is not particularly limited, and is, for example, not less than 0.1. Said ratio ((c)/(a)) is in the range of preferably from 0.1 to 0.9, more preferably from 0.15 to 0.7, still more preferably from 0.2 to 0.5.

As mentioned above, in the present invention, the molecular weight distribution of the powder composition can be adjusted depending on the type of a dextrin to be used, and the like. The dextrin used in this invention preferably comprises a linear dextrin and a cyclic dextrin. As referred to herein, the term "linear dextrin" refers to a dextrin that is composed of glucoses linked in a straight chain form or in the form of chains with branches and which does not form a ring structure or a spiral structure. Also, as referred to herein, the term "cyclic dextrin" refers to a dextrin that is composed of glucoses linked to form a cyclic structure and which does not form a spiral structure.

The type of the linear dextrin is not particularly limited, and examples thereof that can be used include linear dextrins with a DE (dextrose equivalent) of from 1 to 25, and linear dextrins with a weight average molecular weight of from 500 to 160,000. In the present invention, one type of linear dextrin may be used alone, or two or more types thereof may be used in combination. In a preferred embodiment of this invention, two types of linear dextrins are used. For example, in the case of using two types of linear dextrins, a combination of a linear dextrin with a DE of from 2 to 5 and a linear dextrin with a DE of from 16 to 20, or a combination of a linear dextrin with a weight average molecular weight of from 90,000 to 140,000 and a linear dextrin with a weight average molecular weight of from 600 to 1,200, can be used.

In the case of using a linear dextrin(s), the content of the linear dextrin(s) in the powder composition of the present invention is in the range of, for example, from 30 to 65 wt.%, preferably from 35 to 60 wt.%, more preferably from 40 to 55 wt.%. When the two types of linear dextrins to be used are a linear dextrin with a DE of from 2 to 5 and a linear dextrin with a DE of from 16 to 20, the content of the linear dextrin with a DE of from 2 to 5 in the powder composition of this invention is in the range of, for example, from 5 to 45 wt.%, preferably from 15 to 40 wt.%, more preferably from 25 to 35 wt.%, and the content of the linear dextrin with a DE of from 16 to 20 in the powder composition of this invention is in the range of, for example, from 5 to 40 wt.%, preferably from 7 to 30 wt.%, more preferably from 10 to 20 wt.%. The ratio (weight ratio) of the content of the linear dextrin with a DE of from 2 to 5 to that of the linear dextrin with a DE of from 16 to 20 is in the range of, for example, from 4:1 to 1:5, preferably from 3:1 to 1:5, more preferably from 2:1 to 1:4.

When the two types of linear dextrins to be used are a linear dextrin with a weight average molecular weight of from 90,000 to 140,000 and a linear dextrin with a weight average molecular weight of from 600 to 1,200, the content of the linear dextrin with a weight average molecular weight of from 90,000 to 140,000 in the powder composition of the present invention is in the range of, for example, from 5 to 45 wt.%, preferably from 15 to 40 wt.%, more preferably from 25 to 35 wt.%, and the content of the linear dextrin with a weight average molecular weight of from 600 to 1,200 is in the range of, for example, from 5 to 40 wt.%, preferably from 7 to 30 wt.%, more preferably from 10 to 20 wt.%. The ratio (weight ratio) of the content of the linear dextrin with a weight average molecular weight of from 90,000 to 140,000 to that of the linear dextrin with a weight average molecular weight of from 600 to 1,200 is in the range of, for example, from 5:1 to 1:3, preferably from 3:1 to 1:2, more preferably from 2:1 to 1:1.

Examples of the cyclic dextrin that can be used include cyclodextrins. In the present invention, α-cyclodextrin, β-cyclodextrin, and γ-cyclodextrin can all be used, with α-cyclodextrin being preferably used. The weight average molecular weight of the cyclic dextrin used in this invention is not particularly limited, and is in the range of, for example, from 700 to 1,300, preferably from 800 to 1,200, more preferably from 900 to 1,100. In the case of using a cyclic dextrin, the content of the cyclic dextrin in the powder composition of this invention is in the range of, for example, from 0.5 to 15 wt.%, preferably from 1 to 12 wt.%, more preferably from 3 to 10 wt.%.

In the case of using a linear dextrin and a cyclic dextrin in combination, the ratio (weight ratio) of the content of the linear dextrin to that of the cyclic dextrin is in the range of, for example, from 20:1 to 2:1, preferably from 15:1 to 3:1, more preferably from 12:1 to 5:1.

Preferably, the dextrin used in the present invention further comprises a spiral dextrin. As referred to herein, the term "spiral dextrin" refers to a dextrin composed of glucoses linked to form a spiral structure. The DE value of the spiral dextrin used in this invention is not particularly limited and is, for example, less than 7, preferably less than 6, more preferably less than 5.

Examples of the spiral dextrin that can be used include Cluster Dextrin (produced by Ezaki Glico Co., Ltd.). In the case of using a spiral dextrin, the content of the spiral dextrin in the powder composition of the present invention is in the range of, for example, from 1 to 30 wt.%, preferably from 5 to 25 wt.%, more preferably from 10 to 20 wt.%. Further, in the case of using a spiral dextrin, the ratio (weight ratio) of that of a linear dextrin to the content of a spiral dextrin is in the range of, for example, from 1:3 to 3:1, preferably from 1:2 to 2:1, more preferably from 1:1.5 to 1.5:1.

Since the powder composition of the present invention comprises a tea leaf extract, the powder composition of this invention may comprise fragrance components derived from tea leaves. The types of such fragrance components are not particularly limited, and examples thereof include pentanal (valeraldehyde), 2-methylpropanol (isobutylaldehyde), nonanal, trimethylpyradine, 1-octen-3-ol, 2-ethyl-3,5-dimethylpyradine, 2-ethyl-3,6-dimethylpyradine, 2,4-heptadien-6-one, 2,3 -diethyl-5-methylpyradine, 2-methyl-3-n-propylpyradine, benzaldehyde, ethyldecanoate, acethylthiazoline, ethylacetophenone, and p-cresol.

The powder composition of the present invention not only comprises the aforementioned components, but also can have added thereto other additives commonly used in beverages and foods, such as antioxidant, preservative, pH adjustor, sweetener, enrichment, thickening stabilizer, emulsifier, dietary fiber, and quality stabilizer, to the extent that such additives do not impair the effects of the present invention.

The powder composition of the present invention is in the form of powder and is generally solid. The particle size of the powder composition of this invention is not particularly limited, and is in the range of, for example, from 0.1 to 500 µm, preferably from 1 to 300 µm, more preferably from 10 to 200 µm.

The powder composition of the present invention can be consumed as it is, but is preferably consumed in the form of a tea beverage prepared by dissolving the powder composition in water, hot water or the like. Therefore, the powder composition of this invention can be provided as an instant tea. As referred to herein, the term "instant tea" refers to a powder beverage processed from a solution of a liquid tea leaf extract used as a source material by drying into a powder form. Examples of tea beverages include non-fermented teas (*e.g.,* green tea), semi-fermented teas (*e.g.,* oolong tea), and fermented teas (*e.g.,* black tea). Specific examples thereof include: steamed, non-fermented teas (green teas), such as *Sencha* (brewed green tea), *Bancha* (coarse green tea), *Houji-cha* (roasted green tea), *Gyokuro* (refined green tea), *Kabuse-cha* (shaded green tea), and *Tencha* (non-ground tea leaves used for *Matcha*); non-fermented teas including *Kamairi-cha* (pot-roasted green teas) such as *Ureshinocha, Aoyagicha,* and Chinese teas; semi-fermented teas such as *Hoshucha, Tekkanon* tea, and oolong tea; and fermented teas such as black tea, *Awa-bancha,* and puerh tea. The tea beverage in which the powder composition of this invention is used is preferably a green tea. In other words, the powder composition of this invention can be provided as an instant green tea.

The powder composition of the present invention can also be added to foods. Examples of such foods include: confectionary foods, such as cakes, sponge cakes, candies, cookies, jellies, puddings, and chocolates; frozen desserts such as ice creams, ice candies, and sherbets; and snacks, regardless of whether they are Japanese or Western confectionaries. Also, the powder composition of this invention can be used in breads or dairy products. When the powder composition of this invention is added to a food, the amount of the powder composition added can be determined, as appropriate, depending on, for example, the type of the food.

The powder composition of the present invention can be produced through the steps of preparing a solution comprising a tea leaf extract and a dextrin as mentioned above, and drying the prepared solution. Said solution not only comprises a tea leaf extract and a dextrin, but also may contain different additives as mentioned above. The amounts of any of these components to be added can be determined, as appropriate, to the extent that such additives do not impair the effects of the present invention. The order of adding such additives is not particularly limited. As a solvent for preparing the solution, water may be used or a liquid tea leaf extract may be used as it is. The amount of a dextrin to be added to a solution before powdering can be adjusted so as to ensure that the dextrin content in soluble solids of the solution falls within the range of the dextrin content in the powder composition as mentioned above.

The solution can be dried using a method conventionally known to skilled artisans. Examples of drying methods include spray-drying, freeze drying, hot-air drying, and vacuum drying, with spray-drying being preferably used in the present invention. The conditions for spray-drying, such as drying temperature and time, are not particularly limited, and can be adjusted appropriately for powdering the solution.

The process of producing the powder composition of the present invention not only comprises the aforementioned steps, but also may comprise a step of concentrating the solution comprising a tea leaf extract and a dextrin, a step of sterilizing the solution, and/or the like. All of these additional steps can be performed using a method conventionally known to skilled artisans.

Another embodiment of the present invention is directed to use of a dextrin for enhancing the ability of a powder composition comprising a tea leaf extract to retain fragrance components derived from tea leaves, wherein the percentage of a molecular weight fraction of not less than 250,000 in the molecular weight distribution of the dextrin is not less than 10%. Different elements employed in said use, such as tea leaf extract and dextrin, are as described above in preceding paragraphs, and also the distribution of molecular weight fractions in a powder composition is as described above in preceding paragraphs. The use of a dextrin according to this invention is preferably use of a dextrin for the purpose of enhancing the ability of the powder composition to retain fragrance components derived from tea leaves during the process of making the powder composition into a powder form.

### EXAMPLES

Hereunder, the present invention will be described by way of working examples, but this invention is not limited to these examples.

### (1) Preparation of powder compositions

Different powder compositions were prepared using a solid material of liquid green tea extract (product name: GT204S; source material: green tea leaves (made in China)), linear dextrin A (TK-16, produced by Matsutani Chemical Industry Co., Ltd.; weight average molecular weight: 910; DE: 18), linear dextrin B (Sandec #30, produced by Sanwa Starch Co., Ltd.; weight average molecular weight: 120,000; DE: 2 to 5), a spiral dextrin (Cluster Dextrin, produced by Ezaki Glico Co., Ltd.; weight average molecular weight: 400,000; DE: less than 5), and/or a cyclic dextrin (a-cyclodextrin, produced by CycloChem Co., Ltd.; weight average molecular weight: 973). To be specific, different materials were mixed in different relative proportions as shown in the table given below to prepare a total of 6,000 g each of powder mixtures. To each of the powder mixtures, 14,000 g of water was added to prepare a total of 20,000 g (Brix 30%) each of different stock solutions of powder composition. The aforementioned solid material of liquid tea leaf extract was prepared by drying a liquid tea leaf extract into powder, and contained no dextrin.

**[Table 1]**

| | Solid tea material [wt.%] | Linear dextrin A [wt.%] | Linear dextrin B [wt.%] | Spiral dextrin [wt.%] | Cyclic dextrin [wt.%] |
|---|---|---|---|---|---|
| Sample 1 | 50 | 35 | 10 | 0 | 5 |
| Sample 2 | 50 | 25 | 20 | 0 | 5 |
| Sample 3 | 50 | 17 | 28 | 0 | 5 |
| Sample 4 | 50 | 45 | 0 | 0 | 5 |
| Sample 5 | 50 | 35 | 0 | 10 | 5 |
| Sample 6 | 50 | 25 | 0 | 20 | 5 |
| Sample 7 | 50 | 17 | 0 | 28 | 5 |
| Sample 8 | 50 | 17 | 14 | 14 | 5 |

A part of each of the different stock solutions of powder composition prepared above was taken out as a sample for measuring fragrance component concentration, and spray-dried using a spray-dryer to prepare different powder compositions. The drying conditions adopted were an inlet hot-air temperature of 160°C and an outlet hot-air temperature of 110°C.

### (2) Evaluation of the ability to retain fragrance components

Each of the different stock solutions of powder composition and the different powder compositions as prepared above was diluted with or dissolved in water to give a Brix value of 4%. 10 mL each of the prepared solutions was placed in a glass vial containing 3 g of sodium chloride, and the vial was sealed and closed, and then introduced into a gas chromatographic analysis system (Flash GC Nose HERACLES II, produced by Alpha M.O.S. Japan K.K.). The different solutions were analyzed for fragrance components under the conditions detailed below.
Incubation: 60°C for 15 min.
Syringe: temperature: 70°C; cleaning after injection: 90 sec.
Headspace injection: 5000 µL at 250 µL/sec.
Column 1: MXT-5 (slight polarity, 10 m, 180 µm ID, 0.4 µm)
Column 2: MXT-WAX (high polarity, 10 m, 180 µm ID, 0.4 µm)
Carrier gas flow rate: hydrogen 1.6 mL/min.
Flame ionization detector (FID) temperature: 260°C
Injector temperature: 200°C
Oven temperature: 40°C (5 sec.), then raised at 1.5°C/sec. to 250°C (90 sec.) Injection time: 125 sec.
Trap temperature: 50°C for adsorption, 240°C for desorption
Trap time: 130 sec. for adsorption, 35 sec. for preheating

An integrated value of all peak areas was calculated from the data obtained by the analysis, and divided by a measured Brix value of each of the analyzed solutions to determine a total peak area value detected per solids. Then, for each of the samples, the mathematical expression of "(total peak area value per solids detected in powder composition) / (total peak area value per solids detected in stock solution)" was evaluated to determine a percent retention of tea fragrance components during a period from before to after spray-drying.

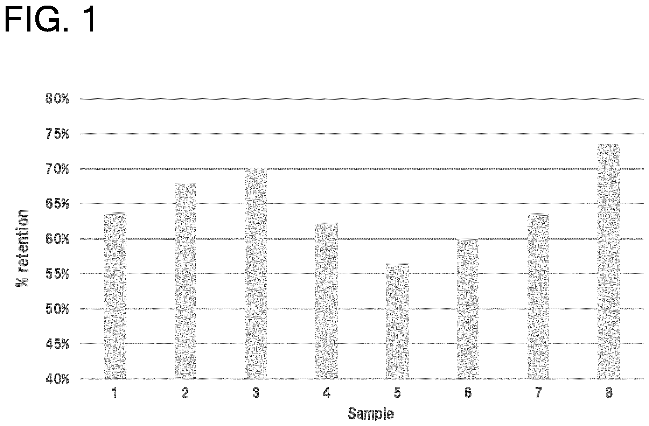

The results of investigating percent retentions of tea fragrance components are as shown in FIG. 1. It was shown that samples prepared with addition of linear dextrin B with a relatively high molecular weight exhibited a higher percent retention of aroma than those prepared with addition of a spiral dextrin (Cluster Dextrin) which was known to have high ability to retain aroma. Further, it was surprisingly found that the highest percent retention of tea fragrance components was exhibited in a sample prepared with combined addition of a spiral dextrin and linear dextrin B.

### (3) Molecular weight distributions in powder compositions

The different powder compositions prepared above were measured for molecular weight distribution of soluble molecules present in each composition. The different powder compositions were diluted with a 0.1 mol/L sodium nitrate solution to a concentration of 1% (w/v) to prepare analysis samples, which were measured for molecular weight distribution using gel permeation chromatography (GPC) analysis. Likewise, the distribution of molecular weight fractions in linear dextrin B was also measured by the same procedure. The conditions adopted for the GPC analysis were as detailed below.
System:
   Sampling injector: 231 XL (produced by Gilson)
   Pump: 305 (produced by Gilson)
   Column oven: CTO-10AS VP (produced by Shimadzu Corporation)
   Detector: RID-10A (produced by Shimadzu Corporation)
Columns: Connected in series in the following order:
   [Pump] → TSKgel Guard Column PWXL (6.0 mm I.D. × 4 cm) (produced by Tosoh Bioscience) → TSKgel G4000PWXL (particle size: 10 µm, 7.8 mm I.D. × 30 cm) (produced by Tosoh Bioscience) → TSKgel G3000PWXL (particle size 7 µm, 7.8 mm I.D. × 30 cm) (produced by Tosoh Bioscience) → [Detector]
Analytical data system: LabSolutions (produced by Shimadzu Corporation)
Flow rate: 1 mL/min.
Injection volume: 50 µL
Mobile phase: 0.1 mol/L sodium nitrate solution
Column temperature: 50°C

First, the retention times of eight molecular weight fractions were detected using Standard P-82 (Shodex, produced by Showa Denko K. K.) as a standard solution, and a calibration curve was constructed based on the detection results. Next, for each of the analysis samples, a total value of peak areas detected at the different retention times was determined and used to calculate the percentage of a peak area for each size of molecules present in each sample (*i.e.,* the percentage of each peak area relative to total peak area). The measurement results of the distributions of molecular weight fractions in the different samples and linear dextrin B are shown in the table given below.

**[Table 2]**

| | Molecular weight | | | | | | | | | |
|---|---|---|---|---|---|---|---|---|---|---|
| | x | y | z | w | a | b | c | d | e | f |
| | <3,000 | ≥3,000 <50,000 | ≥50,000 <150,000 | ≥150,000 <250,000 | ≥250,000 <300,000 | ≥300,000 <350,000 | ≥350,000 <400,000 | ≥400,000 <450,000 | ≥450,000 <500,000 | ≥500,000 |
| Sample 1 | 72.662% | 21.636% | 3.230% | 1.471% | 0.351% | 0.221% | 0.137% | 0.086% | 0.062% | 0.143% |
| Sample 2 | 67.136% | 23.274% | 6.002% | 2.433% | 0.528% | 0.319% | 0.198% | 0.123% | 0.081% | 0.120% |
| Sample 3 | 63.441% | 22.484% | 7.807% | 3.705% | 0.909% | 0.554% | 0.343% | 0.245% | 0.153% | 0.358% |
| Sample 4 | 96.479% | 3.529% | 0.000% | 0.000% | 0.000% | 0.000% | 0.000% | 0.000% | 0.000% | 0.000% |
| Sample 5 | 93.144% | 6.857% | 0.000% | 0.000% | 0.000% | 0.000% | 0.000% | 0.000% | 0.000% | 0.000% |
| Sample 6 | 57.892% | 24.462% | 14.328% | 3.054% | 0.213% | 0.048% | 0.004% | 0.000% | 0.000% | 0.000% |
| Sample 7 | 54.060% | 22.851% | 18.745% | 4.025% | 0.285% | 0.063% | 0.018% | 0.000% | 0.000% | 0.000% |
| Sample 8 | 50.583% | 23.809% | 19.124% | 4.812% | 0.672% | 0.350% | 0.201% | 0.124% | 0.075% | 0.251% |
| Linear dextrin B | 2.683% | 8.582% | 42.294% | 30.286% | 10.913% | 3.693% | 1.181 % | 0.295% | 0.066% | 0.006% |

The percentages of a molecular weight fraction of not less than 250,000, a molecular weight fraction of not less than 300,000, and a molecular weight fraction of less than 50,000, as observed in the molecular weight distributions shown above, are further shown in the table given below. At the same time, the ratio of the percentage (b) of a molecular weight fraction of not less than 300,000 but less than 350,000 relative to the percentage (a) of a molecular weight fraction of not less than 250,000 but less than 300,000 ((b)/(a)), and the ratio of the percentage (c) of a molecular weight fraction of not less than 350,000 but less than 400,000 relative to the percentage (a) of a molecular weight fraction of not less than 250,000 but less than 300,000 ((c)/(a)), as observed in the molecular weight distributions shown above, are also shown in the table given below.

**[Table 3]**

| | Molecular weight | | | b/a | c/a |
|---|---|---|---|---|---|
| | p | q | r | | |
| | ≥250,000 | ≥300,000 | <50,000 | | |
| Sample 1 | 1.000% | 0.649% | 94.298% | 0.630 | 0.390 |
| Sample 2 | 1.369% | 0.841% | 90.410% | 0.604 | 0.375 |
| Sample 3 | 2.562% | 1.653% | 85.925% | 0.609 | 0.377 |
| Sample 4 | 0.000% | 0.000% | 100% | - | - |
| Sample 5 | 0.000% | 0.000% | 100% | - | - |
| Sample 6 | 0.265% | 0.052% | 82.354% | 0.225 | 0.019 |
| Sample 7 | 0.366% | 0.081% | 76.911% | 0.221 | 0.063 |
| Sample 8 | 1.673% | 1.001% | 74.392% | 0.521 | 0.299 |
| Linear dextrin B | 16.154% | 5.241 % | 11.265% | 0.338 | 0.108 |

As evident from the above results, it was found that the percentage of a molecular weight fraction of not less than 250,000 was relatively higher in samples 1, 2, 3 and 8 which exhibited high percent retention of aroma, as compared to those in the other samples. This suggested that when components with a molecular weight of not less than 250,000 are present at a percentage not less than the specified value in the molecular weight distribution of a powder composition, the powder composition can exhibit enhanced percent retention of fragrance components derived from tea leaves.

## Claims

1. A powder composition comprising a tea leaf extract and a dextrin, wherein the percentage of a molecular weight fraction of not less than 250,000 in the molecular weight distribution of the composition is in the range of from 0.5 to 10%.

2. The composition according to claim 1, wherein the percentage of a molecular weight fraction of not less than 300,000 in the molecular weight distribution is in the range of from 0.2 to 5%.

3. The composition according to claim 1 or 2, wherein the ratio of the percentage (b) of a molecular weight fraction of not less than 300,000 but less than 350,000 in the molecular weight distribution relative to the percentage (a) of a molecular weight fraction of not less than 250,000 but less than 300,000 in the molecular weight distribution ((b)/(a)) is not less than 0.3.

4. The composition according to any one of claims 1 to 3, wherein the ratio of the percentage (c) of a molecular weight fraction of not less than 350,000 but less than 400,000 in the molecular weight distribution relative to the percentage (a) of a molecular weight fraction of not less than 250,000 but less than 300,000 in the molecular weight distribution ((c)/(a)) is not less than 0.1.

5. The composition according to any one of claims 1 to 4, wherein the dextrin comprises a linear dextrin and a cyclic dextrin.

6. The composition according to claim 5, wherein the dextrin further comprises a spiral dextrin.

7. Use of a dextrin for enhancing the ability of a powder composition comprising a tea leaf extract to retain fragrance components derived from tea leaves, wherein the percentage of a molecular weight fraction of not less than 250,000 in the molecular weight distribution of the dextrin is not less than 10%.
